# EUROPEAN PATENT APPLICATION

(11) **EP 1 995 671 A1**
(43) Date of publication of application: **26.11.2008**
(21) Application number: 08156858.6
(22) Date of filing: 23.05.2008
(51) Int. Cl.: G06F 17/30

(54) **Method of Generating Information Related to a Web Page**

(30) Priority: 23.05.2007 GB 0709844; 23.05.2007 US 752446
(71) Applicant: Kickstone Technologies LTD, North Stre York North Yorkshire YO106JD (GB)
(72) Inventor: Moss, Simon, 35250, St. Sulpice la Foret (FR); Turner, Michael, York, North Yorkshire YO23 1NL (GB)
(74) Representative: Gover, Richard Paul

(57) **Abstract**

A method of generating information relating to a web page. The method comprises applying a transformation (S2) to a page representation (S1) of a first web page to determine a first feature vector. The first feature vector is compared (S3) to a plurality of feature vectors for other web pages. A subset of feature vectors from the plurality of feature vectors are selected based upon said comparison. Data is extracted (S4) from the subset of feature vectors. A method of generating a transformation for generating a feature vector from a page representation of a web page is also provided.

## Description

The present invention relates to a method of generating information related to a web page. In particular, but not exclusively, the present invention relates to a method of extracting and displaying data from a plurality of web pages related to a currently displayed web page.

A web browser is an application that allows a user to display and interact with text and images located on a web page at a website on the World Wide Web, or a local area network, through a process of formatting HTML, or another file format.

It is known to extend the functionality of web browsers through a browser extension, or plug-in. For example, a known type of browser extension can change the content of a web page displayed to a user, without changing the content of the web page stored at the website. Such a browser extension may be desirable in order to format the information contained within a web page in a manner more appropriate for the computing device on which it is to be displayed and in a manner more appropriate for the user of the computing device (for instance visually impaired users).

Known existing methods for automatically changing the displayed content of a web page are based upon the content of the web page. For example, a browser extension known as "Adblock" prevents a web browser from loading images within a web page from the website server which are likely to be advertisements. The Adblock browser operates by identifying and negating blocks of HTML within the HTML describing that web page that are associated with advertisements.

However, known methods for changing the displayed content of a web page are limited to only operating upon data contained within that web page.

It is an object of embodiments of the present invention to obviate or mitigate one or more of the problems associated with the prior art, whether identified herein or elsewhere. In particular, it is an object of embodiments of the present invention to provide a method of automatically adjusting the content of a web page to include relevant information extracted automatically from other relevant web pages. In particular, it is an object of embodiments of the present invention to provide a method for changing the content of a currently viewed web page so that the web page or another browser window contains relevant information extracted automatically from other web pages without require a user viewing the current web page to take any action, or provide any input. Certain embodiments of the present invention may thus be referred to as "no-click" methods for changing the content of a currently viewed web page.

The information extracted from other web pages may be displayed within a modified version of the web page. Alternatively, the information may be displayed alongside a currently displayed web page, for instance in a separate window or within a tool bar within the web browser. The method changes the displayed content of a web page, based upon its content, to include relevant information from other web pages from other hosts, immediately or substantially immediately and automatically, as a page is browsed.

According to a first aspect of the present invention there is provided a method of generating information relating to a web page, the method comprising: applying a transformation to a page representation of a first web page to determine a first feature vector; comparing the first feature vector with a plurality of feature vectors for other web pages; selecting a subset of feature vectors from the plurality of feature vectors based upon said comparison; and extracting data from the subset of feature vectors.

An advantage of the first aspect of the present invention is that relevant data extracted from other web pages may be displayed at the same time as displaying a current web page. The relevant data comprises information extracted from other web pages, for instance price data from other online sellers may be extracted and displayed to allow a user to compare prices for a product being viewed on the current web page. Advantageously, data is extracted from other web pages and displayed automatically, without requiring the user to perform any action.

The first web page is displayed within a web browser. Furthermore, said data may be displayed by the web browser. Said data may be displayed in a separate browser window to the first web page.

Said data may be displayed independently of any user input.

Said plurality of feature vectors may be generated by applying a transformation to page representations of the other web pages.

Said data comprises a subset of feature elements contained within each of said plurality of feature vectors.

The method may further comprise generating a page representation of the first web page by augmenting a HTML file for the first web page with the URL address of the web page.

Applying a transformation to the page representation to determine a first feature vector may comprise filtering the page representation to extract feature elements forming the first feature vector. Said filtering may comprise applying a Regular Expression to said page representation.

Selecting a subset of feature vectors from the plurality of feature vectors based upon said comparison may comprise selecting a subset of feature vectors from the plurality of feature vectors for which at least a first predetermined feature element matches a corresponding feature element within the first feature vector.

The method may further comprise generating page representations of a plurality of web pages; applying transformations to said page representations to determine a plurality of feature vectors; and storing said plurality of feature vectors.

Said web pages may include at least one product which is for sale. Said feature vector may comprise manufacturer, product code, price, seller and URL feature elements. Applying a transformation to a page representation of a first web page to determine a first feature vector may comprise: identifying the URL of the web page; extracting the seller feature element from the URL of the web page; selecting local transformations for the manufacturer, product code and price feature elements; and applying the local transformations to the page representation of the first web page to extract the manufacturer, product code and price feature elements of the first feature vector. Said displayed data may comprise price and seller feature elements for each of the subset of feature vectors, said URL feature element generating a displayed hyperlink to each web page corresponding to a displayed price or seller feature element.

According to a second aspect of the present invention there is provided a method of retrieving information relating to a web page at a first computer, the method comprising:
transmitting a page representation of a first web page to a second computer; and
receiving from the second computer data from a subset of feature vectors selected from a plurality of feature vectors for other web pages based upon a comparison of a first feature vector generated by applying a transformation to the page representation of the first web page with the plurality of feature vectors.

According to a third aspect of the present invention there is provided a method of generating information relating to a web page at a second computer, the method comprising: receiving a page representation of a first web page from a first computer;
applying a transformation to the page representation to determine a first feature vector; comparing the first feature vector with a plurality of feature vectors for other web pages; selecting a subset of feature vectors from the plurality of feature vectors based upon said comparison; and transmitting data extracted from the subset of feature vectors to the first computer.

An advantage of the second and third aspects of the present invention is that the first computer can comprise a client computer at which a user may use a web browser to browse to a web page. A page representation is generated and transmitted to a second computer, such as a server computer, at which data from feature vectors corresponding to other web pages is generated and transmitted to the first computer for display within the web browser. It will be appreciated that in alternative embodiments of the present invention the position within a computer network at which a processing step may be implemented may vary. Furthermore, the present invention is not restricted to a client / server computer network. For instance, the present invention may be implemented within a peer to peer network.

According to a fourth aspect of the present invention there is provided a method of generating a transformation for generating a feature vector from a page representation of a web page, the method comprising: receiving a set of web pages; estimating a feature vector for a page representation corresponding to each web page; comparing the estimated feature vector for each page representation with feature vectors from other web pages; selecting a subset of the estimated feature vectors according to a result of said comparison; generating a transformation for each of said subset of estimated feature vectors; applying each generated transformation to other web pages and determining whether correct feature vectors are generated; and selecting the generated transformation that generates the most correct feature vectors.

An advantage of the fourth aspect of the present invention is that transformations for use in the first, second or third aspects of the present invention may be generated automatically from web pages selected from a web page host.

Estimating a feature vector for each page representation may comprise identifying feature elements from said page representations by applying a predetermined set of filters to said page representations.

A separate transformation may be generated for web pages from separate web page hosts. Comparing the estimated feature vector for each page representation with feature vectors from other web pages may comprise comparing estimated feature vectors from web pages associated with a first web page host with estimated feature vectors from web pages associated with other web page hosts.

Generating a transformation for each of said subset of estimated feature vectors may comprise identifying portions of the page representation surrounding each identified feature element that are unique within the page representation.

Applying each generated transformation to other web pages to determine whether correct feature vectors are generated may comprise applying the generated transformation to other web pages from the same web page host and comparing the generated feature vectors to feature vectors from other web page hosts.

According to a firth aspect of the present invention there is provided a carrier medium carrying computer readable code for controlling a computer to carry out the method of any of the first to the fourth aspects of the present invention.

According to a sixth aspect of the present invention there is provided a computer apparatus for implementing any of the first to the fourth aspects of the present invention, the apparatus comprising: a program memory storing processor readable instructions; and a processor configured to read and execute instructions stored in said program memory; wherein the processor readable instructions comprise instructions controlling the processor to carry out any of the first to the fourth aspects of the present invention..

Embodiments of the present invention may be implemented in software. For example a carrier medium carrying computer readable code for controlling a computer to carry out the above aspects of the invention may be provided. In particular, the present invention may be implemented as a browser extension for a web browser. Alternatively, a computer apparatus comprising a program memory storing processor readable instructions and a processor configured to read and execute instructions stored in said program may be provided. The processor readable instructions stored in said program memory may comprise instructions controlling the processor to carry out the above aspects of the invention. The computer apparatus may comprise bespoke hardware.

The present invention will now be described, by way of example only, with reference to the following drawings, in which:
Figure 1 illustrates as a flow chart a method of generating and displaying information related to a web page extracted from other web pages in accordance with an embodiment of the present invention;
Figure 2 is a portion of a screen shot of a web browser displaying a first web page, the web browser further displaying information extracted from other web pages in accordance with the method illustrated in Figure 1;
Figure 3 schematically illustrates a computer network suitable for implementing the first embodiment of the invention; and
Figure 4 illustrates as a flow chart a method of generating a transformation in accordance with an embodiment of the present invention.

As discussed above, embodiments of the present invention relate to methods for automatically and substantially immediately changing the content of a currently viewed web page or displaying additional information alongside a currently viewed web page. The additional relevant information is extracted automatically from other web pages.

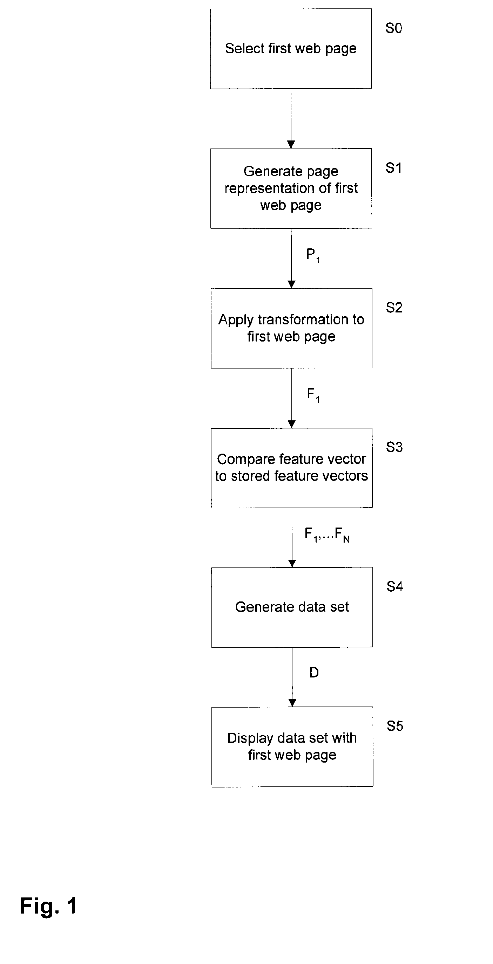

With reference to figure 1, the method of selecting and displaying relevant information extracted from other web pages begins at step S0 with the selection of a first web page. Typically this will occur when a web browser user browses to a web page. The method then comprises generating a representation, P₁, of the content of a first web page at step S1. A transformation, T, is then applied to the representation of the page in order to determine a page feature vector, F₁=T(P₁) at step S2. The feature vector comprises a series of feature elements extracted from the page representation, for instance price or product data.

The page feature vector, F₁, is then compared at step S3 to a plurality of stored feature vectors generated for other web pages using the same or a corresponding transformation in order to identify related web pages, for instance web pages relating to the same product, if the currently displayed web page relates to a product information page for an online seller. The feature vector F₁ is used to retrieve related feature vectors, F₂,.......,F_{N} that have been similarly derived from other web pages and stored. Once the subset of related feature vectors F={F₁,....., F_{N}} has been identified, feature elements within each feature vector are collected into a set of data D at step S4. The set of data D may comprise only portions of data extracted from each feature vector. Data D is then delivered to the web browser for display at step S5 either within the current web page or, for instance, within a pop-up browser window.

The representation of the current web page, P₁, may be the raw HTML text version of the page, or some normalized or transformed version thereof. The HTML, normalized or transformed web page may be augmented to include the URL for the page or other information identifying or relating to the web page. It will be appreciated by the appropriately skilled person that HTML is only one example of a file format for web pages. Where the term HTML is used herein, or in the claims, it is to be interpreted as including any other file format suitable for storing or generating web pages. Similarly, it will be appreciated that the term URL should be interpreted as including any method of identifying a web page, including a URL in both textual and numeric formats.

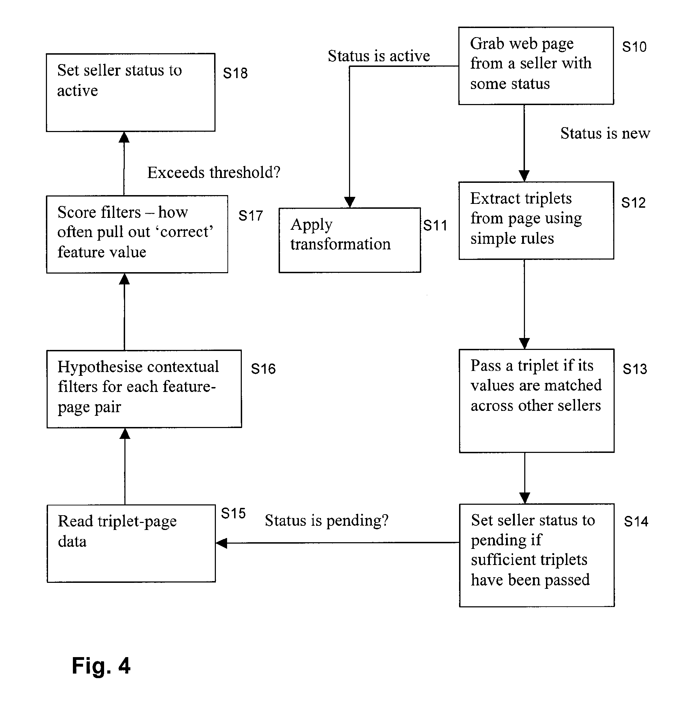

A global transformation T, comprising a series of local transformations, is used to extract appropriate features from the representation of the web page. The global transformation T is initially learnt by providing a set of M example pages, say, *P*= {*P*₁,....., *P*_{M}) and a set of corresponding feature vectors *F*={ *F*₁,......, *F*_{M}} through a variety of transformation determination methods for F=T(P). The process of initially generating a transformation T is described in greater detail below, with reference to figure 4.

Once the feature vector, F₁, has been generated for the currently displayed web page, it is stored in a database or other suitable storage device, so that it too may be available for retrieval when other web pages are being viewed by the same or a different user. Existing feature vectors within the database may be periodically reviewed in order to ensure that, for instance, price and URL details remain correct. The review of feature vectors may, for instance, be triggered when a count of feature vectors from a given seller that are not matched to feature vectors from other sellers exceeds a predetermined value. The process of updating both the feature vectors and the transformations is described in greater detail below in relation to figure 4. Furthermore, the database may be populated with feature vectors for other web pages using the same or a corresponding transformation in an offline process, without the use of a web browser and without requiring a user to browse to web pages.

As noted above, the feature vector for a currently displayed web page, F₁, is used to retrieve relevant information stored in a database. This is achieved by comparing the feature vector, or a subset of feature elements within it, against the stored feature vectors, and retrieving those that match.

In accordance with a first embodiment of the present invention the method of extracting and displaying information from web pages may be used to obtain price information for products advertised on seller web pages on the World Wide Web. The method allows price information to be automatically identified within web pages such that comparative price information for a product can be displayed as a user views a web page including a product that is for sale. The display of price information is dependent upon the identification of a product for sale within a currently displayed web page and the same product being recorded within the database (that is, similar feature vectors for web pages from other sellers relating to the same product are stored in the database). This price comparison service does not require any interaction from a user viewing a web page.

In accordance with the first embodiment of the present invention the representation of a web page comprises the HTML text of the web page concatenated with its URL. The feature vector includes feature elements that uniquely identify a product, for instance the product's manufacturer and manufacturer's part code or product code extracted from the page representation using the transformation. The feature vector also includes seller, price and web page URL information. The seller, price and web page URL information is included in the feature vector as this constitutes the data fields to be extracted as data D and displayed in the browser for the subset of related feature vectors.

The feature vector for page Pᵢ is therefore defined as the following elements Fᵢ = { manufacturerᵢ, codeᵢ, sellerᵢ, URLᵢ, priceᵢ}.

In order to extract the values of the feature vector from the page a global transformation T for that web page is required. As described below, T is initially unknown and is generated from a training set of data in advance of the user browsing to a particular web page. Given example pages and a corresponding set of known feature vectors *F*={*F*₁,....., *F*_{M}) for a given seller, (generated automatically or manually) a transformation T can be estimated as the solution to F = T(P). The global transformation T comprises a single transformation that can be applied to any web page from any seller. As will be described in greater detail below, applying the global transformation comprises a two stage process in which initially the seller is identified from the URL of the web page and then a series of local transformations suitable for that seller are identified for extracting the manufacturer, price and product code information from the web page. The feature vector for that web page can then be populated with the manufacturer, price and product code feature elements together with the seller and web page URL feature elements. The local transformations within the global transformation may be unique to a particular seller, or may be generally applicable to two or more or all different sellers, as is described in greater detail below.

In accordance with certain embodiments of the present invention generating a feature vector by applying a global transformation is a two stage process. Firstly, the seller is extracted uniquely from the host name of the URL for the web page and used to populate the seller feature element of the feature vector. The URL for the web page is also used unmodified to populate the URL feature element of the feature vector. The seller is then used to identify a set of local transformations for that seller, which are used to extract manufacturer, code and price elements from the web page. For each seller s, a set of local transformations Tₛ = { T_{s,m} , T_{s,c} , T_{s,p} } are used to extract manufacturer m, code c, and price p features respectively. Each local transformation may be unique to that seller. The operation of each local transformation Tₛ is described in greater detail below.

Given T, the feature vector for the page currently being browsed can be generated as the solution to F₁ = T (P₁). This feature vector can then be matched within the database for features vectors from other web pages which relate to the same product. As discussed above, the feature vectors for the other sellers may have been generated by the same user or another user having browsed that web page, or alternatively the same or a corresponding transformation may have been applied to that web page in a separate process independent of any user.

For price comparison, extracting seller and price information from other web pages for a product displayed on the current page requires that all feature vector entries where the manufacturer and code feature elements match those in the current vector F₁ are retrieved.

The set of retrieved feature vectors contains the seller and price information for all the web pages across all sellers identified for the product in question. This information can be organized in a suitable manner, and prepared for display in the web browser. For instance, the data may be ordered by price, and then the seller and price details displayed, with the URL information for each vector used to generate hyperlinks allowing the user to browse to the web page associated with any of the selected feature vectors.

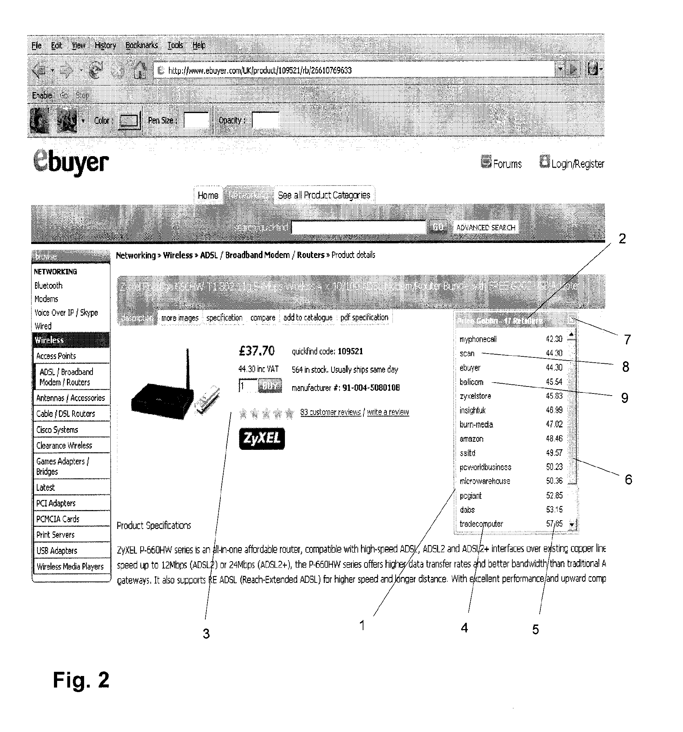

Referring now to Figure 2, this illustrates a portion of a screen shot of a web page within a web browser window further displaying price information extracted from other web pages in accordance with and embodiment of the present invention. A table of prices 1 (labeled "Price Goblin") for the product in question, derived from other web sites, is generated and displayed automatically by the web browser, without any action or input from the user.

The table of prices is displayed as a pop-up window, however, in other embodiments of the present invention the table of prices could be displayed within a modified version of the currently displayed web page, within a web browser tool bar or in any conventional manner. The table of prices indicates in title bar 2 that seventeen sellers have been identified for the product described in the currently displayed web page 3 (a Zyxel wireless internet router). For each identified seller of that product, the seller name is listed in a first column 4, together with the price in a second column 5 for the same wireless router from that seller. As there is insufficient space to list all seventeen sellers in the pop-up window, a scroll bar 6 is provided for viewing the details for each listed seller. Each listed seller 4 comprises a hyperlink to the web page from that seller describing the same product. Selecting one of the hyperlinks opens the web page from that seller for the same product, either in the existing window or in a separate browser window. A close window icon 7 is provided allowing the user to close the pop-up window.

As described above, for extracting price information from other web pages, the page currently being browsed is represented by the HTML text augmented by the URL, so that, for the currently viewed web page illustrated in the partial screen shot of Figure 2 the page representation is as follows:

The HTML for page representation P₁ above is shown abbreviated by ellipsis.

Local transformations T_{ebuyer,m}, T_{ebuyer,c}, T_{ebuyer,p} have previously been generated for the host www.ebuyer.com.

The local transformations are each uniquely identified from contextual information learnt from example web page-feature vector combinations, as described in more detail in relation to figure 4.

Each local transformation is represented as a contextual form, expressed as a Regular Expression. For example, the transformation for extracting the name of the manufacturer is in the form T_{ebuyer,m} = "manufacturer #:(.+?)<)". This Regular Expression operates as follows. Firstly, and instance of the string "manufacturer #:" is located within the HTML for that web page. Then, as encoded by the Regular Expression string "(.+?)" all text moving forward is selected until the string "<" is located. The selected text is the extracted feature value, that is for T_{ebuyer,m} the selected text is the name of the manufacturer.

The contextual information comprises HTML fragments that are known to surround the required element of the feature vector within a web page from a particular seller. For example, for product pages from the host www.ebuyer.com the HTML fragments "manufacturer #:" and "<" surround the manufacturer's name. The manufacturer element comprises a Regular Expression that can be applied to the page representation for a new web page in order to extract the name of a manufacturer from a product information web page. The elements of the Regular Expression can be represented in other forms than a Regular Expression, as will be readily apparent to the skilled person. The skilled person will appreciate that where the term "Regular Expression" is used herein, it is to be interpreted as including methods of defining a filter for extracting a feature element from contextual information within a page representation.

Likewise, T_{price,p} is determined from the Regular Expression ">(.+?)inc vat".

The transformation elements may be unique to each seller, and depend upon the way in which a particular seller organizes their product information web pages.

Using the local transformations T_{ebuyer,m}, T_{ebuyer,c}, T_{ebuyer,p}, and given that as discussed above the seller's name and the page URL are simple to extract, the feature vector for this page, can be generated:

The feature vector is then matched against previously generated and stored feature vectors in the feature vector database derived from previously visited web pages, on the basis of matching manufacturer and part or product code elements. In accordance with other embodiments of the present invention it may be that matches are made for similar products, not only exact manufacturer and part code correspondences. For example, the feature "product name" could be included as an element in the feature vectors. A local transformation for each seller may be generated to extract a product name string in the same way as that described above for price, manufacturer and code elements. Partial matches between product names may then be identified by looking for similar but none identical strings within other web page feature vectors using known string searching techniques, giving us the additional ability to identify similar products.

With reference to figure 2, suppose the product name "zyxel p-650hw series all-in-one affordable router" can be identified for the product on this web page. When selecting the subset of other feature vectors, the inclusion of a product name feature element allows the identification of not just identical products in the database on the basis of exact manufacturer and product code matches, but also similar products on the basis of a partial name match.

For example, the words in this product name that also occur in the names of each other feature vector may be counted. One alternative would be to rank products on the basis of this word count, and select the feature vectors with the highest word count for display, provided they meet a word count threshold. So for example, if a product has previously been identified with the name was "hp all-in-one affordable router", this would have a word count of 3, because the words "all-in-one", "affordable" and "router" are common to the name extracted for the page in figure 2, whereas a product with the name "acer aspire p-650w laptop core 2 duo t5500" would have a word count of 1. As such, the former would be higher up in the ordered list, and more suitable for display.

Alternative ways of measuring the similarity between name strings, and deciding which products, if any, should pass on for display will be readily apparent to the appropriately skilled person.

For the example shown in figure 1, there are sixteen feature vectors within the database that match the manufacturer and product code elements within the feature vector for the currently displayed web page, from sixteen alternative sellers. For example, feature vectors F₃ and F₅ correspond to entries 8, 9 in the list of sellers shown in Figure 1 are as follows:

The recovered feature vectors are then ordered by price and the (seller, price, URL) feature element triplets selected. This set is the display data D.

The display data D is fed back to the browser where a process within the browser extension formats the data, and presents it for display, in this case as pop-up window 1.

As discussed above, the process does not require the user to provide any input - the relevant data simply appears as the user browses.

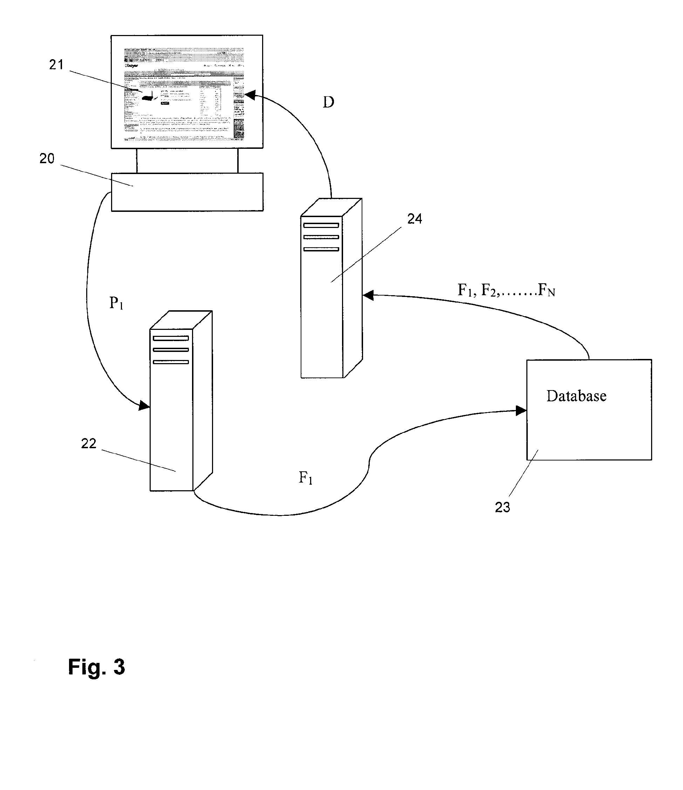

Referring now to figure 3, this schematically illustrates the architecture of an exemplary computer network suitable for implementing the present invention.

Figure 3 illustrates a first computer 20 including a display screen 21 for displaying a web browser to a user. When the user browses to a web page a browser extension automatically generates a page representation P₁ and sends the page representation to an external processor 22. Processor 22 may be a server computer located at a location remote from the first computer 20.

Processor 22 applies a transformation T to the page representation P₁ in order to generate feature vector F₁. If the web page does not relate to a product for sale, then no feature vector is generated.

Processor 22 sends the feature vector F₁ to database 23 to determine whether other feature vectors are stored for the same product (by comparing the manufacturer and part number elements within feature vector F₁ against the corresponding elements of stored feature vectors). Feature vector F₁ is also stored within the database 23 for future use, if it is not already listed in the database.

Database 23 sends a list of all the feature vectors relating to the same product to processor 24. Processor 24 collates the feature vector data and extracts price, seller and URL information from each feature vector and sends this extracted data D to the first computer 20. A browser extension running on computer 20 then arranges this information for display within the web browser.

It will be appreciated that figure 3 is exemplary, and that the computer network may be different in alternative embodiments of the present invention. The point within the system at which any particular processing step is performed is immaterial. For instance, the functions of processors 22 and 24 and the database 23 may be implemented by a single processor or two processors. In other embodiments the client computer may be responsible for generating the feature vector for the currently displayed web page, before sending the feature vector to an external database to identify related feature vectors. The entire process may be implemented only at a single client computer, for which only a locally stored database of feature vectors is processed. Alternatively, the present invention could be implemented in a peer-to-peer architecture. For a peer-to-peer architecture, each computer may generate a feature vector for the currently displayed web page and store generated feature vectors locally. Related feature vectors may be obtained by querying the feature vectors stored by one or more of the other peer computers.

The transformation T applied to a web page from a particular seller is used to extract appropriate features from the representation of the web page. For each product web page a feature vector is either manually generated or estimated and then checked against feature vectors from other sellers to see if the feature vector corresponds to a real product. An initial estimate of the transformation is generated and then used to determine feature vectors for further product web pages for that seller.

The process of generating a transformations for a plurality of sellers will now be described with reference to the flow chart of figure 4. A global transformation T is required, which contains local transformations Tₛ = {T_{s,m}, T_{s,c}, T_{s,p} } for each individual seller s.

Two processes are involved in learning the transformation: a data gathering phase that identifies a set of suitable page-feature vector pairs for each seller, and a learning phase which uses the set or page-feature vector pairs to hypothesize and test potential local transformations.

In order to learn each local transformation T_{S} a set of example pages, P_{S}, and a corresponding set of feature vectors, F_{S} are required.

At step S10 of figure 4 a first web page from a seller is selected. If the status of that seller has previously been set to "active" this indicates that there is a known transformation for that seller and the process continues at step S 11 by applying the global transformation to that web page in order to generate a new feature vector. Alternatively, the status for that seller may be set to "new" indicating that there is no known transformation. When the process is initially begun the status of all sellers is set to "new".

If the status of the seller is "new" then a number of web pages from that seller are selected in order to generate a training set of web pages. This process may use a standard web page grabbing method, and so will not be described further here.

Furthermore, it may be that only web pages where there is a single main product are used within the training set. Pages containing multiple products can be identified at a later stage of the process, if application of a test local transformation identifies multiple feature elements.

For the seller with the status "new", web page-feature vector pairs are generated for the second learning phase of the transformation generation, where each feature vector contains the elements {manufacturer, code, seller, URL, price}.

It is trivial to identify the seller and URL elements of the vector for a given page (the seller being uniquely identified by the host name of the URL) and so the following description concentrates on extracting values for manufacturer, code, and price.

Given a grabbed web page, initial estimates of feature locations and values are generated at step S12. For instance, for the manufacturer element, the locations and values of words in the page that precede the substrings "Ltd", "Limited" or "Corp" are identified. In order to reduce false matches words that exist in a standard dictionary are ignored. Note that this process may extract multiple potential manufacturer elements from a single web page.

For the price element, the locations and values of numbers (integer or floating point) in the page that follow a currency character, "£" or "$" may be identified. Again, the process may return multiple price elements (for instance if prices including and excluding VAT are listed).

For the product code element, the locations and values of words in the page containing both a letter and a number may be identified. Again, multiple potential product code values may be identified.

The process then attempts to identify at step S 13 which manufacturer-code-price triplet, if any, from the extracted information constitutes appropriate data for revising the transformation. This identification is based upon the assumption that a triplet is appropriate if its values are replicated across more than one seller. That is, if the same product details appear across the product pages of several sellers then it is likely that a product has been correctly identified by a potential manufacturer-code-price triplet extracted from the web page of the first seller. Manufacturer and product codes for a given product typically transfer exactly from one seller to another, and prices tend to be similar. Thus, any triplet whose values can be matched to those of another seller's web page has a high probability of corresponding to a real product. This matching may, for instance, be based not on an exact match. For instance, a price may be deemed to match that from another seller if they are within 10% of one another and manufacturer and part code are deemed to match if there is a full string match, ignoring capitalization. The number of other sellers that have a web page having a triplet that matches the triplet under consideration is counted.

At step S 14, if a triplet for the web page from the current seller matches those for at least u other sellers then the web page and feature vector are considered to be suitable for learning the transformation. For instance, u may be set to 3.

Data gathering for a seller continues as described above for other web pages from the same seller until at least v potential triplets for that seller then are suitable for transformation learning have been generated. For instance, v may be set to 10. Once this threshold has been reached, the status of the seller is set to "pending".

At step S 15, the process continues by selecting sellers with status "pending" and retrieving the appropriate page and triplet feature vector data.

At step S 16 for each page each feature (manufacturer, code, price) in examined in turn. The location of the feature is identified and the first character to the left of this location is selected. Characters extending leftwards are also selected until the selected context information is unique (that is, the context information does not appear anywhere else on the web page). The process is then repeated for the righthand context information. The extracted left-right context pair is referred to as a feature filter.

Once extracted, the feature filter is applied to all web pages in the learning set at step S 17, and a count is made of how many times the filter pulls out a single value that matches the input data. Web pages where multiple feature values are extracted are ignored as this suggests there are multiple products on the page.

The feature filter with the highest count is chosen, and the status of the feature vector is set to "active", provided that the count is higher than some threshold, w, for instance w=7.

If there exists an active filter for each feature (manufacturer, code and price), then a set of local transformations Tₛ can be constructed and included in the global transformation along with the seller and URL filters (which as noted above are straightforward to extract for all sellers from the web page URL).

If a local transformation Tₛ cannot be constructed because there is not a feature filter that passes the threshold w then the status of the seller is set to "new". Data for that seller is deleted and the process begins at step S10. The process thus continues by selecting a new set of pages for that seller, which may subsequently be used for learning the transformation, and the generation of feature filters.

Once a set of local transformations for a seller has been generated, the status of the seller is set to "active" at step S 18. The transformation may then be applied to any grabbed page for that seller in order to begin populating the database of feature vectors.

If it is later noted that none of the most recent feature vectors extracted from a seller's pages are matched across the web pages of other sellers, it is assumed that the transformation is no longer functioning correctly. This may be because of a change in the product web page design for that seller. Any stored data for that seller is deleted and status of the seller is set to "new" so that the transformation can be re-learnt.

It will be appreciated by the appropriately skilled person from the teaching herein that the present invention may be advantageously used in many other applications aside from a price comparison service. For instance, the present invention may be used to implement a web search service in which information and hyperlinks to web pages related to the currently displayed web page are automatically provided based upon the extraction of appropriate key words or key concepts within the currently browsed web page by way of a transformation, T. For the currently displayed web page a feature vector is generated and matched to feature vectors from other web pages. The information extracted from other web pages and displayed is extracted using the same transformation process as for the currently displayed web page, and so may change over time as the other web page changes. No interaction is required from the owner of the other web page in order to generate this information.

Alternatively, the present invention may be used to automatically display content of relevance from other web sites. For instance, the content could be text, images or hyperlinks relating to items such as news, odds, share prices, similar products, relating to the currently displayed web page for easy comparison.

Where the present invention is used to generate and display information relating to a currently displayed web page other than product price information it will be appreciated that the process of applying a global transformation to a page representation of the web page may be conducted in two stages. The first stage may comprise identifying a suitable set of local transformations for extracting required feature elements, and the second stage may comprise applying the local transformations.

Other modifications to and applications of the present invention will be readily apparent to the appropriately skilled person, from the teaching herein, without departing from the scope of the appended claims.

## Claims

1. A method of generating information relating to a web page, the method comprising:
applying a transformation to a page representation of a first web page to determine a first feature vector;
comparing the first feature vector with a plurality of feature vectors for other web pages;
selecting a subset of feature vectors from the plurality of feature vectors based upon said comparison; and
extracting data from the subset of feature vectors.

2. A method according to claim 1, wherein the first web page and said data are displayed within a web browser.

3. A method according to any one of the preceding claims, wherein said plurality of feature vectors are generated by applying a transformation to page representations of the other web pages.

4. A method according to any one of the preceding claims, wherein said data comprises a subset of feature elements contained within each of said plurality of feature vectors.

5. A method according to any one of the preceding claims, further comprising generating a page representation of the first web page by augmenting a HTML file for the first web page with the URL address of the web page.

6. A method according to any one of the preceding claims, wherein applying a transformation to the page representation to determine a first feature vector comprises filtering the page representation to extract feature elements forming the first feature vector.

7. A method according to any one of the preceding claims, wherein selecting a subset of feature vectors from the plurality of feature vectors based upon said comparison comprises selecting a subset of feature vectors from the plurality of feature vectors for which at least a first predetermined feature element matches a corresponding feature element within the first feature vector.

8. A method according to any one of the preceding claims, further comprising:
generating page representations of a plurality of web pages;
applying transformations to said page representations to determine a plurality of feature vectors; and
storing said plurality of feature vectors.

9. A method according to any one of the preceding claims, wherein said web pages include at least one product which is for sale and said feature vector comprises manufacturer, product code, price, seller and URL feature elements and wherein applying a transformation to a page representation of a first web page to determine a first feature vector comprises:
identifying the URL of the web page;
extracting the seller feature element from the URL of the web page;
selecting local transformations for the manufacturer, product code and price feature elements;
and applying the local transformations to the page representation of the first web page to extract the manufacturer, product code and price feature elements of the first feature vector.

10. A method according to any one of the preceding claims, the method further comprising:
receiving a set of web pages;
estimating a feature vector for a page representation corresponding to each web page;
comparing the estimated feature vector for each page representation with feature vectors from other web pages;
selecting a subset of the estimated feature vectors according to a result of said comparison;
generating a transformation for each of said subset of estimated feature vectors;
applying each generated transformation to other web pages and determining whether correct feature vectors are generated; and
selecting the generated transformation that generates the most correct feature vectors.

11. A method of retrieving information relating to a web page at a first computer, the method comprising:
transmitting a page representation of a first web page to a second computer; and
receiving from the second computer data from a subset of feature vectors selected from a plurality of feature vectors for other web pages based upon a comparison of a first feature vector generated by applying a transformation to the page representation of the first web page with the plurality of feature vectors.

12. A method of generating information relating to a web page at a second computer, the method comprising:
receiving a page representation of a first web page from a first computer;
applying a transformation to the page representation to determine a first feature vector;
comparing the first feature vector with a plurality of feature vectors for other web pages;
selecting a subset of feature vectors from the plurality of feature vectors based upon said comparison; and
transmitting data extracted from the subset of feature vectors to the first computer.

13. A method of generating a transformation for generating a feature vector from a page representation of a web page, the method comprising:
receiving a set of web pages;
estimating a feature vector for a page representation corresponding to each web page;
comparing the estimated feature vector for each page representation with feature vectors from other web pages;
selecting a subset of the estimated feature vectors according to a result of said comparison;
generating a transformation for each of said subset of estimated feature vectors;
applying each generated transformation to other web pages and determining whether correct feature vectors are generated; and
selecting the generated transformation that generates the most correct feature vectors.

14. A method according to claim 13, wherein estimating a feature vector for each page representation comprises identifying feature elements from said page representations by applying a predetermined set of filters to said page representations.

15. A method according to claim 13 or claim 14, wherein a separate transformation is generated for web pages from separate web page hosts.

16. A method according to claim 15, wherein comparing the estimated feature vector for each page representation with feature vectors from other web pages comprises comparing estimated feature vectors from web pages associated with a first web page host with estimated feature vectors from web pages associated with other web page hosts.

17. A method according to any one of claims 13 to 16, wherein generating a transformation for each of said subset of estimated feature vectors comprises identifying portions of the page representation surrounding each identified feature element that are unique within the page representation.

18. A method according to any one of claims 13 to 17, wherein applying each generated transformation to other web pages to determine whether correct feature vectors are generated comprises applying the generated transformation to other web pages from the same web page host and comparing the generated feature vectors to feature vectors from other web page hosts.
